# EUROPÄISCHE PATENTANMELDUNG

(11) **EP 0 762 541 A2**
(43) Veröffentlichungstag der Anmeldung: **12.03.1997**
(21) Anmeldenummer: 96112548.1
(22) Anmeldetag: 02.08.1996
(51) Int. Cl.: H01Q 21/00, H01Q 3/26

(54) **Einrichtung zum Kalibrieren und Testen von Sende/Empfangs-Modulen in einer aktiven elektronisch phasengesteuerten Gruppenantenne**

(30) Priorität: 29.08.1995 DE 19531757
(71) Anmelder: SIEMENS AKTIENGESELLSCHAFT, 80333 München (DE)
(72) Erfinder: Schäffner, Rainer, Dipl.-Ing., 85386 Eching (DE)

(57) **Zusammenfassung**

In den Sende/Empfangs-Modulen einer aktiven elektronisch phasengesteuerten Gruppenantenne ist nach der Erfindung jeweils ein zusätzliches Schaltnetzwerk (SN) vorgesehen, das die Verwendung der ohnehin schon vorhandenen, gewöhnlich als Steckanschluß ausgebildeten Sendesignal- und Empfangssignalanschlüsse (A1, A2) nicht nur für den normalen Sende- und Empfangsbetrieb, sondern auch im Test- und Kalibrationsbetrieb gestattet. Die Einrichtung nach der Erfindung ist zum Prüfen und Kalibrieren von Sende/Empfangs-Modulen in aktiven Phased-Array-Antennen geeignet.

## Beschreibung

Die Erfindung bezieht sich auf eine Einrichtung gemäß dem Oberbegriff des Patentanspruchs 1.

Aus DE 42 03 932 A1 und DE 42 04 199 A1 sind Sende/Empfangs-Module für aktive elektronisch phasengesteuerte Gruppenantennen bekannt. Es ist erforderlich, daß derartige Sende/Empfangs-Module, die getrennte Steckanschlüsse zur Zuführung des Sendesignals Tx bzw. zur Abnahme des Empfangssignals Rx aufweisen, einer Kalibration und einer Prüfung im eingebauten Zustand (Built-in-Test = BIT) unterzogen werden können. Diese Kalibration bzw. dieser Test wurden bisher durch Einspeisung und Auskopplung von Kalibrier- und Testsignalen über einen Richtkoppler an einem eigenen HF-Signalsteckeranschluß (Testport) ausgeführt. Neben diesem zusätzlichen HF-Signalsteckeranschluß an jedem Sende/Empfangs-Modul ist in der elektronisch phasengesteuerten Gruppenantenne außerdem noch ein eigenes Summier- und Verteilnetzwerk (Calibration Feed) notwendig, das einen verhältnismäßig großen technischen Aufwand darstellt.

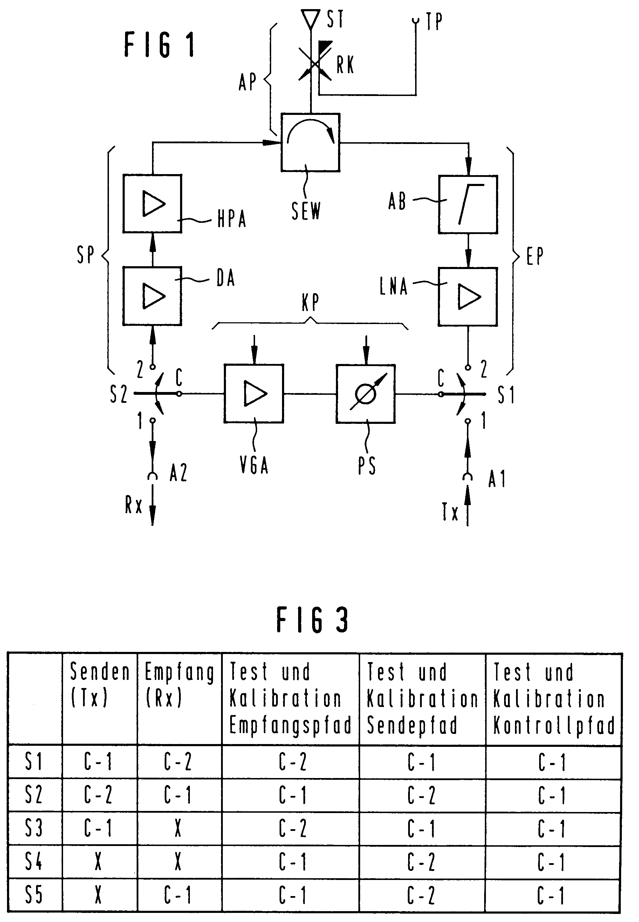

In diesem Zusammenhang wird im folgenden Fig. 1 erläutert, welche das prinzipielle Blockschaltbild eines bekannten Sende/Empfangs-Moduls einer elektronisch phasengesteuerten Gruppenantenne mit Richtkoppler und eigenem HF-Signalsteckeranschluß für die Kalibrations- und Testsignale zeigt.

Der in Fig. 1 dargestellte Sende/Empfangs-Modul besteht aus einem Empfangspfad EP, einem Sendepfad SP, einem gemeinsamen Kontrollpfad KP und einem gemeinsamen Strahlerpfad AP. Der Empfangspfad EP enthält einen Amplitudenbegrenzer AB für das empfangene HF-Signal und einen nachgeschalteten rauscharmen hochempfindlichen Verstärker LNA. Der Sendepfad SP enthält einen Treiberverstärker DA und in Reihe dazu einen Hochleistungsverstärker HPA. Der gemeinsame Kontrollpfad besteht aus einer Reihenschaltung eines elektronisch einstellbaren Phasenschiebers PS und eines HF-Verstärkers VGA mit einstellbarer Verstärkung. Der gemeinsame Strahlerpfad AP führt zu einem Strahler ST und enthält eine Sende/Empfangs-Weiche SEW, die im Beispiel als Zirkulator ausgeführt ist, und einen Richtkoppler RK. Ein auszusendendes HF-Signal Tx gelangt von einem Sendesignalanschluß A1 über einen ersten Umschalter S1, den Kontrollpfad KP, einen zweiten Umschalter S2, den Sendepfad SP und den Strahlerpfad AP an den Strahler ST. Dabei ist im Umschalter S1 der Schaltweg C-1 und im Umschalter S2 der Schaltweg C-2 durchgeschaltet.

Ein vom Strahler ST empfangenes HF-Signal gelangt über den Strahlerpfad AP, den Empfangspfad EP, den ersten Umschalter S1, den Kontrollpfad KP und den zweiten Umschalter S2 an einen Empfangssignalanschluß A2, liegt dort als verstärktes Empfangssignal Rx vor und kann dann weiter verarbeitet werden. Im Empfangsfall ist beim Umschalter S1 der Schaltweg C-2 und beim Umschalter S2 der Schaltweg C-1 durchgeschaltet.

Über den Richtkoppler RK im gemeinsamen Strahlerpfad AP und dort über den eigens vorgesehenen HF-Signalsteckeranschluß (Testport) TP werden die Test- bzw. Kalibrationssignale in den Sende/Empfangs-Modul eingespeist und ausgekoppelt.

Aufgabe der Erfindung ist es, für Sende/Empfangs-Module einer aktiven elektronisch phasengesteuerten Gruppenantenne eine Einrichtung anzugeben, welche die Verwendung der ohnehin vorgesehenen, gewöhnlich als Steckanschlüsse ausgebildeten Sendesignal- und Empfangssignalanschlüsse außer für den normalen Sende- und Empfangsbetrieb auch im Test- und Kalibrationsbetrieb gestattet.

Diese Aufgabe wird bei einer gattungsgemäßen Einrichtung durch die im kennzeichnenden Teil des Patentanspruchs 1 angegebenen Merkmale gelöst.

Durch die Erfindung ergeben sich sehr wesentliche Vorteile. Zum einen entfällt der zur Einspeisung und Auskopplung der Test- bzw. Kalibrationssignale sonst erforderliche eigene HF-Signalsteckeranschluß (Testport) und zum anderen ist auch das bei den bekannten und üblichen Kalibrier- und Testeinrichtungen von Sende/Empfangs-Modulen eingesetzte zusätzliche Summier- und Verteilnetzwerk (Calibration Feed) nicht mehr erforderlich.

Zweckmäßige und vorteilhafte Weiterbildungen der Erfindung sind in den Unteransprüchen angegeben.

Im folgenden wird die Erfindung anhand von Figuren erläutert.

Es zeigen
- Fig. 2: ein prinzipielles Blockschaltbild eines Sende/Empfangs-Moduls mit einer Einrichtung zum Kalibrieren und Testen nach der Erfindung, und
- Fig. 3: eine Tabelle mit Umschalterstellungen für die einzelnen Betriebsmodi.

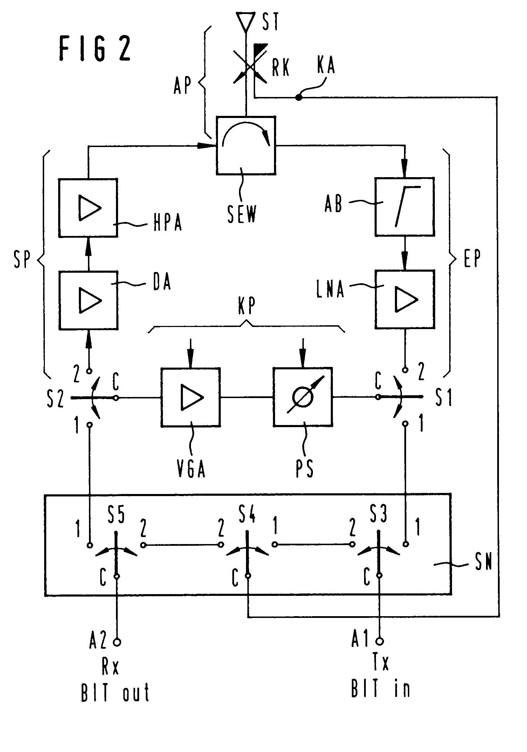

In Fig. 2 ist ein beispielhafter Blockschaltbildaufbau eines Sende/Empfangs-Moduls, der in der Hochfrequenzebene arbeitet, dargestellt. Dieser Modul ist Teil einer elektronisch phasengesteuerten Gruppenantenne, insbesondere zur Verwendung in Radargeräten, und besteht aus einem Empfangspfad EP, einem Sendepfad SP, einem gemeinsamen Kontrollpfad KP, einem gemeinsamen Strahlerpfad AP und einem Schaltnetzwerk SN.

Der Empfangspfad EP besteht aus einem Amplitudenbegrenzer AB für das empfangene Hochfrequenzsignal und einem nachgeschalteten rauscharmen hochempfindlichen Verstärker LNA. Der Sendepfad SP setzt sich aus einem Treiber-Verstärker DA und einem Hochleistungsverstärker HPA in Reihe dazu zusammen. Der gemeinsame Kontrollpfad KP besteht aus einer Reihenschaltung eines elektronisch einstellbaren Phasenschiebers PS und eines HF-Verstärkers VGA mit regelbarer Verstärkung. Der gemeinsame Strahlerpfad AP arbeitet auf einen Strahler ST und enthält einen Richtkoppler RK und eine Sende/Empfangs-Weiche SEW, die im Ausführungsbeispiel als Zirkulator realisiert ist. Das Schaltnetzwerk SN enthält drei Umschalter S3, S4 und S5, die außer zwei jeweils eine Durchschaltung bewirkenden Schaltwegen C-1, C-2 noch einen Leerschaltweg aufweisen.

Zur Ein-, Um- und Abschaltung des Kontrollpfads KP sind zwei Umschalter S1 und S2 vorgesehen, die jeweils zwei Schaltwege C-1, C-2 aufweisen.

Im folgenden werden für die einzelnen Betriebsmodi des Sende/Empfangs-Moduls die dafür jeweils erforderlichen Stellungen der Umschalter S1 bis S5 und die jeweiligen Signalwege beschrieben. In Fig. 3 sind die einzelnen Stellungen der Umschalter S1 bis S5 für die einzelnen Betriebsmodi tabellarisch dargestellt.

Ein zu sendendes Hochfrequenz-Signal Tx wird einem Sendesignalanschluß A1 zugeführt und gelangt von dort über den Schaltweg C-1 des Umschalters S3 im Schaltnetzwerk SN über den Schaltweg C-1 des Umschalters S1 in den Kontrollpfad KP und von dort über den Schaltweg C-2 des Umschalters S2 in den Sendepfad SP und von dort über die Sende/Empfangs-Weiche SEW in den Strahlerpfad AP. Die Umschalter S4 und S5 im Schaltnetzwerk SN befinden sich im Leerschaltweg.

Ein vom Strahler ST empfangenes HF-Signal gelangt über den Strahlerpfad AP, die Sende/Empfangs-Weiche SEW, den Empfangspfad EP über den Schaltweg C-2 des Umschalters S1 in den Kontrollpfad HP und von dort über den Schaltweg C-1 des Umschalters S2 und den Schaltweg C-1 des Umschalters S5 im Schaltnetzwerk SN an den Empfangssignalanschluß A2. Dort liegt es als verstärktes Empfangssignal Rx vor und kann in weiteren Empfängerstufen weiter verarbeitet werden. Die Umschalter S3 und S4 im Schaltnetzwerk SN befinden sich im Empfangsfall jeweils in ihrem Leerschaltweg. Die Leerschaltwege sind in der in Fig. 3 dargestellten Tabelle mit X bezeichnet.

Für die Kalibrierung oder Prüfung (Test) des Sendepfades SP eines Sende/Empfangs-Moduls wird das HF-Kalibrations- bzw. Testsignal BIT in am Sendesignalanschluß A1 eingespeist und über den Schaltweg C-1 des Umschalters S3 im Schaltnetzwerk SN, den Schaltweg C-1 des Umschalters S1, den Kontrollpfad KP, den Schaltweg C-2 des Umschalters S2, den Sendepfad SP, die Sende/Empfangs-Weiche SEW, den Richtkoppler RK im Strahlerpfad AP, den Koppelanschluß KA, den Schaltweg C-2 des Umschalters S4 im Schaltnetzwerk SN und den Schaltweg C-2 des Umschalters S5 im Schaltnetzwerk SN zum Empfangssignalanschluß A2 geführt und dort als Ausgangssignal BIT out abgenommen. Das dort abgennommene Signal BIT out wird im Anschluß daran einem Auswerteempfänger zugeführt, dort zuerst gemischt, dann gefiltert und analog/digital gewandelt und nach einer Quadraturdemodulatorfilterung (I/Q-Kanal) bewertet.

Für die Kalibrierung oder Prüfung (Test) des Empfangspfades EP eines Sende/Empfangs-Moduls wird das Kalibrier- bzw. Testsignal BIT in ebenfalls am Sendesignalanschluß A1 eingespeist und über den Schaltweg C-2 des Umschalters S3 im Schaltnetzwerk SN, den Schaltweg C-1 des Umschalters S4 im Schaltnetzwerk SN, den Koppelanschluß KA, den Richtkoppler RK im Strahlerpfad AP, die Sende/Empfangs-Weiche SEW, den Empfangspfad EP, den Schaltweg C-2 des Umschalters S1, den Kontrollpfad KP, den Schaltweg C-1 des Umschalters S2 zum Schaltweg C-1 des Umschalters S5 im Schaltnetzwerk SN zum Empfangssignalanschluß A2 geführt und dort als Ausgangssignal BIT out abgenommen und dem Auswerteempfänger zugeführt. Der weitere Ablauf bis einschließlich der Bewertung entspricht demjenigen der Kalibrierung und Prüfung (Test) des Sendepfads.

Für die Prüfung (Test) und Kalibration des Kontrollpfades KP wird das Test- bzw. Kalibrationssignal BIT in ebenfalls dem Sendesignalanschluß A1 eingespeist und gelangt von dort über den Schaltweg C-1 des Umschalters S3 im Schaltnetzwerk SN, den Schaltweg C-1 des Umschalters S1, den Kontrollpfad KP, den Schaltweg C-1 des Umschalters S2 und den Schaltweg C-1 des Umschalters S5 im Schaltnetzwerk SN als Ausgangssignal BIT out zum Empfangssignalanschluß A2. Der weitere Ablauf hinsichtlich Auswertung und Bewertung entspricht ebenso demjenigen bei der Kalibrierung und Prüfung (Test) des Sendepfades.

## Patentansprüche

1. Einrichtung zum Kalibrieren und Testen von in einer aktiven elektronisch phasengesteuerten Gruppenantenne eingesetzten Sende/Empfangs-Modulen, bestehend jeweils aus einem Empfangspfad, einem Sendepfad, einem gemeinsamen, zu einem Strahler führenden Pfad und einem gemeinsamen Kontrollpfad, wobei der gemeinsame, zum Strahler führende Pfad eine Sende/Empfangs-Weiche und zur Einspeisung und Auskopplung eines HF-Test- und -Kalibrationssignals an einem Koppelanschluß einen Richtkoppler enthält, der Empfangspfad einen rauscharmen HF-Empfangsverstärker aufweist, der Sendepfad einen HF-Leistungsverstärker enthält und der gemeinsame Kontrollpfad die Reihenschaltung eines steuerbaren Phasenschiebers und eines hinsichtlich seiner Verstärkung steuerbaren Verstärkers umfaßt und wobei ein zu sendendes HF-Signal von einem Sendesignalanschluß über einen ersten Schaltweg eines ersten Umschalters, den Kontrollpfad, einen zweiten Schaltweg eines zweiten Umschalters, den Sendepfad sowie die Sende/Empfangs-Weiche zum Strahlerpfad und ein empfangenes HF-Signal vom Strahlerpfad über die Sende/Empfangs-Weiche, den Empfangspfad, den zweiten Schaltweg des ersten Umschalters, den Kontrollpfad sowie den ersten Schaltweg des zweiten Umschalters an einen Empfangssignalanschluß gelangt, an dem es als verstärktes Empfangssignal zur Weiterverarbeitung vorliegt,
**dadurch gekennzeichnet,**
daß ein Schaltnetzwerk (SN) mit fünf Anschlüssen vorgesehen ist, von denen der erste den Sendesignalanschluß (A1) und der zweite den Empfangssignalanschluß (A2) bildet, der dritte mit dem Koppelanschluß (KA) des Richtkopplers (RK) zur Einspeisung und Auskopplung des Test- und Kalibrationssignals (BIT), der vierte mit dem ersten Schaltweg (C-1) des ersten Umschalters (S1) und der fünfte mit dem ersten Schaltweg (C-1) des zweiten Umschalters (S2) verbunden ist, daß das Schaltnetzwerk (SN) so aufgebaut und in Verbindung mit den beiden Umschaltern (S1, S2) so zusammengeschaltet ist, daß im Sendefall ein Weg für das Sendesignal (Tx) vom Sendesignalanschluß (A1) über den ersten Schaltweg (C-1) des ersten Umschalters (S1), den Kontrollpfad (KP), den zweiten Schaltweg (C-2) des zweiten Umschalters (S2), den Sendepfad (SP) und die Sende/Empfangs-Weiche (SEW) zum Strahlerpfad (AP) durchgeschaltet ist, daß im Empfangsfall ein Weg vom Strahlerpfad (AP) über die Sende/Empfangs-Weiche (SEW), den Empfangspfad (EP), den zweiten Schaltweg (C-2) des ersten Umschalters (S1), den Kontrollpfad (KP), den ersten Schaltweg (C-1) des zweiten Umschalters (S2) zum Empfangssignalanschluß (A2) für die dortige Abnahme des verstärkten Empfangssignals (Rx) durchgeschaltet ist, daß im Fall eines Tests bzw. einer Kalibration des Sendepfads (SP) ein Test- bzw. Kalibrationssignal (BIT in) am Sendesignalanschluß (A1) eingespeist wird und zugleich ein Weg vom Sendesignalanschluß (A1) über den ersten Schaltweg (C-1) des ersten Umschalters (S1), den Kontrollpfad (KP), den zweiten Schaltweg (C-2) des zweiten Umschalters (S2), den Sendepfad (SP), die Sende/Empfangs-Weiche (SEW), den Strahlerpfad (AP), den Richtkoppler (RK), den Koppelanschluß (KA) des Richtkopplers zum Empfangssignalanschluß (A2) durchgeschaltet ist, daß im Fall eines Tests bzw. einer Kalibration des Empfangspfades (EP) ein Test- bzw. Kalibrationssignal (BIT in) ebenfalls am Sendesignalanschluß (A1) eingespeist wird und zugleich ein Weg vom Sendesignalanschluß (A1) über den Koppelanschluß (KA) des Richtkopplers (RK), den Richtkoppler, den Strahlerpfad (AP), die Sende/Empfangs-Weiche (SEW), den Empfangspfad (EP), den zweiten Schaltweg (C-2) des ersten Umschalters (S1), den Kontrollpfad (KP), den ersten Schaltweg (C-1) des zweiten Umschalters (S2) zum Empfangssignalanschluß (A2) durchgeschaltet ist, daß im Fall eines Tests bzw. einer Kalibration des Kontrollpfads (KP) ein Test- bzw. Kalibrationssignal (BIT in) ebenso am Sendesignalanschluß (A1) eingespeist wird und zugleich ein Weg vom Sendesignalanschluß (A1) über den ersten Schaltweg (C-1) des ersten Umschalters (S1), den Kontrollpfad (KP), den ersten Schaltweg (C-1) des zweiten Umschalters (S2) zum Empfangssignalanschluß (A2) durchgeschaltet ist, und daß das am Empfangssignalanschluß (A2) jeweils entnommene Test- und Kalibrationssignal (BIT out) im Anschluß an eine Verarbeitung einer Bewertungseinrichtung zugeführt wird.

2. Einrichtung nach Anspruch 1,
**dadurch gekennzeichnet,**
daß das Schaltnetzwerk (SN) drei zusätzliche Umschalter (S3, S4, S5) enthält, die jeweils außer zwei Schaltwegen (C-1, C-2) noch einen Leerschaltweg aufweisen, daß der erste Schaltweg (C-1) des ersten zusätzlichen Umschalters (S3) den Sendesignalanschluß (A1) mit dem ersten Schaltweg (C-1) des ersten Umschalters (S1) verbindet, daß der erste Schaltweg (C-1) des dritten zusätzlichen Umschalters (S5) den Empfangssignalanschluß (A2) mit dem ersten Schaltweg (C-1) des zweiten Umschalters (S2) verbindet, daß der zweite Schaltweg (C-2) des ersten zusätzlichen Umschalters (S3) mit dem ersten Schaltweg (C-1) des zweiten zusätzlichen Umschalters (S4) und der zweite Schaltweg (C-2) des dritten zusätzlichen Umschalters (S5) mit dem zweiten Schaltweg (C-2) des zweiten zusätzlichen Umschalters (S4) verbunden ist, daß im Sendefall beim ersten zusätzlichen Umschalter (S3) der erste Schaltweg (C-1) und beim zweiten sowie beim dritten zusätzlichen Umschalter (S4, S5) jeweils der Leerschaltweg eingeschaltet ist, daß im Empfangsfall beim ersten sowie beim zweiten zusätzlichen Umschalter (S3, S4) jeweils der Leerschaltweg und beim dritten zusätzlichen Umschalter (S5) der erste Schaltweg (C-1) eingeschaltet sind, daß im Fall eines Tests bzw. einer Kalibration des Sendepfads (SP) beim ersten zusätzlichen Umschalter (S3) der erste Schaltweg (C-1), beim zweiten zusätzlichen Umschalter (S4) der zweite Schaltweg (C-2) und beim dritten zusätzlichen Umschalter (S5) der zweite Schaltweg (C-2) eingeschaltet sind, daß im Falle eines Tests bzw. einer Kalibration des Empfangspfads (EP) beim ersten zusätzlichen Umschalter (S3) der zweite Schaltweg (C-2), beim zweiten zusätzlichen Umschalter (S4) der erste Schaltweg (C-1) und beim dritten zusätzlichen Umschalter (S5) der erste Schaltweg (C-1) durchgeschaltet sind und daß im Falle eines Tests bzw. einer Kalibration des Kontrollpfads (KP) beim ersten zusätzlichen Umschalter (S3) der erste Schaltweg (C-1), beim zweiten zusätzlichen Umschalter (S4) ein beliebiger der drei Schaltwege und beim dritten zusätzlichen Umschalter (S5) der erste Schaltweg (C-1) eingeschaltet sind.

3. Einrichtung nach Anspruch 1 oder 2,
**dadurch gekennzeichnet,**
daß die Sende/Empfangs-Weiche (SEW) ein Zirkulator ist.

4. Einrichtung nach Anspruch 1,
**dadurch gekennzeichnet,**
daß die vor der Bewertung stattfindende Verarbeitung des im Empfangssignalanschluß (A2) entnommenen HF-Test- bzw. Kalibrationssignals (BIT out) in einer Mischung, Filterung, Analog/Digital-Wandlung und Quadraturdemodulatorfilterung (I/Q-Kanal) besteht.

5. Einrichtung nach einem der vorhergehenden Ansprüche,
gekennzeichnet durch
die Verwendung für Radar.
